Europäisches Patentamt

European Patent Office

Office européen des brevets

(19)

(11) Veröffentlichungsnummer : **0 196 440**
**B1**

(12) **EUROPÄISCHE PATENTSCHRIFT**

(45) Veröffentlichungstag der Patentschrift :
09.11.88

(21) Anmeldenummer : 86102136.8

(22) Anmeldetag : 19.02.86

(51) Int. Cl.⁴ : **G 01 F 1/80**

(54) **Vorrichtung zur Messung eines Massestromes.**

(30) Priorität : 06.03.85 DE 3507993

(43) Veröffentlichungstag der Anmeldung :
08.10.86 Patentblatt 86/41

(45) Bekanntmachung des Hinweises auf die Patenterteilung : 09.11.88 Patentblatt 88/45

(84) Benannte Vertragsstaaten :
AT DE FR GB IT

(56) Entgegenhaltungen :
DE-A- 2 544 976
US-A- 2 771 773
US-A- 2 934 951

(73) Patentinhaber : **Klöckner CRA Technologie GmbH**
**Klöcknerstrasse 29**
**D-4100 Duisburg 1 (DE)**

(72) Erfinder : **Fassbinder, Hans-Georg, Dr. rer. nat.**
**Am Annaschacht 32**
**D-8458 Sulzbach-Rosenberg (DE)**

(74) Vertreter : **Kador & Partner**
**Corneliusstrasse 15**
**D-8000 München 5 (DE)**

EP 0 196 440 B1

Jouve, 18, rue St-Denis, 75001 Paris, France

**Beschreibung**

Die Erfindung betrifft eine Vorrichtung zur Messung eines Massestroms nach dem Oberbegriff des Anspruchs 1.

Zur direkten Messung von Masseströmen, d. h. Masse/Zeiteinheit, sind bereits eine Reihe von Vorrichtungen bekannt. Eine Klasse dieser Vorrichtungen basiert auf dem Prinzip einer Messung derjenigen Kraft, die aufgewendet werden muß, um einem linear durch eine Rohrleitung strömenden Massestrom eine bestimmte Winkelgeschwindigkeit bzw. tangentiale Geschwindigkeitskomponente aufzuprägen. Die dazu erforderliche Kraft ist dem Massestrom direkt proportional. Es gilt die Beziehung

$$\text{Drehmoment} = k \cdot \text{Winkelgeschwindigkeit} \cdot \text{Massestrom}$$

Wird daher die Winkelgeschwindigkeit konstant gehalten, so ist der Massestrom eine lineare Funktion des Drehmoments.

Zur Messung des Durchsatzes von Schüttgut sind bereits Vorrichtungen bekannt, bei denen das Schüttgut axial auf einen Drehteller geleitet wird, der mit radial verlaufenden Leitschaufeln besetzt ist. Der Drehteller wird von einem Synchronmotor mit konstanter Drehzahl angetrieben und das Antriebsdrehmoment gemessen. Die Veränderung dieses Drehmomentes ist ein direktes Maß für die Schwankungen des Massestromes.

Zur Messung dieses Drehmomentes sind verschiedene Lösungen bekannt. Die einfachste Lösung besteht in einer Messung der Leistungsaufnahme des Motors. Diese Methode liefert jedoch recht ungenaue Ergebnisse, da sämtliche nachgeschalteten sich ständig ändernden Reibungsverluste sowohl im Motor als auch in einem gegebenenfalls nachgeschalteten Getriebe mit in das Meßergebnis eingehen (Gbm 70 23 502).

Auch die direkte Abnahme des Drehmomentes von der Antriebswelle des Drehtellers hat sich als nachteilig erwiesen, da die Meßwerte über Bürstenkontakte von der rotierenden Welle abgenommen werden müssen, was unter rauhen Betriebsbedingungen eine erhöhte Störanfälligkeit zur Folge hat (US-PS 2 934 951).

Es ist auch bekannt, den Antriebsmotor für den Drehteller unmittelbar unterhalb des Drehtellers anzuordnen und den Motor um seine Antriebsachse verdrehbar zu lagern. Eine Verdrehung des Motorgehäuses wird durch einen in eine Tauchspule ragenden Arm überwacht, der am Motorgehäuse befestigt ist. Das dem Antriebsdrehmoment entsprechende Reaktionsdrehmoment sucht das Motorgehäuse zu verdrehen. Diese Verdrehung wird durch eine von der Tauchspule auf den Arm ausgeübte elektromagnetische Kraft kompensiert. Diese Kraft, die das Motorgehäuse ständig in einer bestimmten Soll-Lage hält, ist der Stromaufnahme der Tauchspule proportional. Damit ist die Größe dieses Stromes ein Maß für die pro Zeiteinheit über den Drehteller fließende Masse (DE-PS 1 211 415). Diese Lösung ist schon aus dem Grund nicht praktikabel, da die zur Beschleunigung hoher Massenströme erforderlichen Antriebsmotoren eine große träge Masse besitzen, deren Einregelung in eine bestimmte Soll-Lage nur durch die Erzeugung hoher elektromagnetischer Kräfte möglich ist. Bei derartig hohen Stellkräften sind jedoch kleine Schwankungen der Meßgröße nicht mehr mit ausreichender Sicherheit feststellbar. Bei der bekannten Lösung besteht darüberhinaus keine Möglichkeit für die Zwischenschaltung eines Getriebes.

Es ist auch bereits eine Vorrichtung bekannt (US-PS 2 771 773), bei der das Drehmoment gemessen wird, das auf die Zwischenwelle eines Getriebes ausgeübt wird, das zwischen Antriebsmotor und Drehteller angeordnet ist. Die Zwischenwelle des Stirnradgetriebes ist in dem Schaft gelagert, dessen unteres Ende so aufgehängt ist, daß der Schaft um eine Achse verschwenkt werden kann, die rechtwinkelig zur Achse der Zahnräder gerichtet ist und in einer zu den Zahnrädern parallelen Ebene liegt. Die Schwenkachse des Schaftes für die Zwischenwelle ist darüberhinaus so angeordnet, daß der Schaft mit der Zwischenwelle und dem Zwischenzahnrad durch das Antriebsritzel aus der Eingriffsebene der Zähne herausgekippt wird. Dieser Verlagerung wirkt eine Feder entgegen, die gerade das Leerlaufdrehmoment kompensiert. Wird bei Beaufschlagung des Drehtellers mit einem Massestrom ein größeres Drehmoment übertragen, wird der Schaft pneumatisch in seiner Lage gehalten. Der dazu erforderliche und auf einem geeigneten Meßinstrument abgelesene Druck ist wiederum ein Maß für das übertragene Drehmoment.

Als nachteilig an dieser Vorrichtung ist insbesondere die systembedingte lange Totzeit anzusehen, die verstreicht, bis nach Einregelung des kompensierenden pneumatischen Druckes ein Meßwert angezeigt wird. Die Regelung pulsierender Schüttgutströme ist mit der bekannten Vorrichtung nicht möglich. Darüberhinaus ist der apparative Aufwand für die Regelung hoch und die Störanfälligkeit entsprechend.

In jüngster Zeit wurden chemische und metallurgische Verfahren entwickelt, bei denen pulverförmige oder feinkörnige Stoffe untereinander oder mit flüssigen oder gasförmigen Stoffen in genau definiertem stöchometrischen Verhältnis in einem kontinuierlichen Prozeß zur Reaktion gebracht werden. Als Beispiel seien die Vergasung von Kohle oder die Schmelzreduktion von Eisenerzen genannt. Diese Verfahren erfordern es, die Masseströme mehrerer Komponenten aufeinander abzustimmen, was die Messung und Regelung dieser Masseströme voraussetzt. Wie schon vorstehend ausgeführt, besteht das Hauptproblem darin, das Drehmoment bzw. Bremsmoment (n · ṁ) genügend genau zu messen. Naturgemäß wird die Welle des Drehelements nicht nur vom Materialstrom, sondern auch von Reibungskräften abgebremst. Diese Reibungskräfte verändern sich sehr stark bei Temperaturschwankungen, da sich die Zähigkeit der für die Wellenlagerung benötigten Schmierstoffe ändert.

Der Erfindung liegt die Aufgabe zugrunde, eine Vorrichtung der eingangs genannten Art derart weiterzubilden, daß die Anzeige der Meßeinrichtung unabhängig von der temperaturbedingten Zähigkeit und damit von der inneren Reibung im Stirnradgetriebe ist, so daß ohne Benutzung von Eichkurven bei jeder Temperatur das gemessene Bremsmoment ein Maß für die Größe des durchgesetzten Massestroms ist.

Diese Aufgabe wird durch die im Anspruch 1 angegebene Erfindung gelöst.

Die Lösung der Aufgabe basiert auf der Erkenntnis und dem Bestreben, die Wirkungen zu kompensieren, die durch Viskositätskräfte im Getriebe einerseits auf die Antriebswelle des Drehelements und andererseits auf die Zwischenwelle einwirken. Im Rahmen der Erfindung werden einmal die Radien der Stirnräder so gewählt, daß das Leerlauf-Reibmoment, welches auf die Lagerung der Zwischenwelle einwirkt, dem Zwischenwellen-Leerlauf-Reibmoment entgegengerichtet ist. Davon ausgehend werden dann, z. B. durch Verwendung von Zahnrädern unterschiedlicher, vorgegebener Breite diese entgegengerichteten Leerlauf-Reibmomente so eingestellt, daß die die Lagerung der Zwischenwelle im Leerlauf zu bewegen trachtenden Momente einander aufheben, die Stör-Momente also vollständig kompensiert werden. Wenn sich nun die Viskosität des Getriebeöls temperaturabhängig ändert, ändern sich gegebenenfalls die Leerlauf-Reibmomente, jedoch in gleichem Maße, so daß die Kompensation erhalten bleibt.

Vorteilhafte Weiterbildungen der Erfindung sind in den Unteransprüchen gekennzeichnet.

Nachfolgend sind Ausführungsformen der Erfindung anhand der beigefügten Zeichnung beispielsweise beschrieben. Es zeigen:

Fig. 1 einen schematisierten Vertikalschnitt durch die Vorrichtung und

Fig. 2 einen schematisierten Vertikalschnitt durch eine weitere, gegenüber der Vorrichtung nach Fig. 1 abgewandelte Vorrichtung.

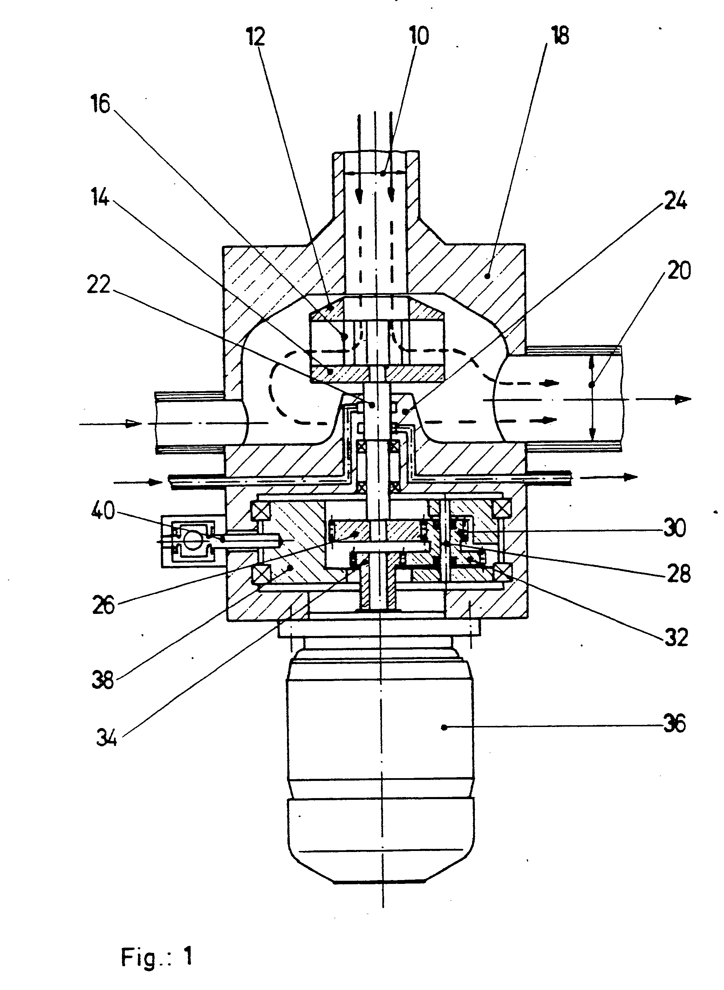

Nach Fig. 1 gelangt der Massestrom über eine Zuleitung 10 auf ein Drehelement 12.

Das Drehelement 12 ist im vorliegenden Fall als Flügelrad ausgebildet, bestehend aus einem horizontalen Drehteller 14 mit aufgesetzten Leitschaufeln 16.

Der das Drehelement bzw. Flügelrad 12 von oben axial beaufschlagende Massenstrom wird aus seiner axialen Richtung abgelenkt und erhält eine tangentiale Geschwindigkeitskomponente. Das Flügelrad 12 weist so viele Leitschaufeln 16 auf, daß alle Masseteilchen bei Verlassen des Flügelrades die Winkelgeschwindigkeit besitzen, durch welche das Flügelrad angetrieben wird. Die ungefähre Bewegungsbahn der Teilchen durch das Flügelrad ist durch einen gestrichelten Pfeil angedeutet.

Das Flügelrad 12 rotiert in einem Gehäuse 18, dessen innere Kammer so gestaltet ist, daß sie dem strömenden Schüttgut möglichst wenig scharfe Ecken und Widerstände bietet. Nachdem das Schüttgut das Flügelrad in radialer Richtung verlassen hat, strömt es im Gehäuse 18 zu einem Auslaß 20, dessen Querschnittsfläche wenigstens dem der Zuleitung 10 für den Massestrom entspricht.

Das Flügelrad 12 wird von einer Welle 22 angetrieben, die in einem gehäusefesten Schaft 24 so gelagert ist, daß auftretende Axialkräfte aufgefangen werden.

Am unteren Ende der Welle 22 ist ein Abtriebsstirnrad 26 aufgekeilt, das mit einem auf einer Zwischenwelle 28 gelagerten Zahnrad 30 kämmt.

Ein weiteres, auf dieser Welle befestigtes Stirnrad 32 kämmt mit dem Antriebsritzel 34 eines in der Achse der Antriebswelle für das Flügelrad unterhalb der Vorrichtung angeflanschten Motors 36.

Das Getriebe bzw. die Zwischenwelle mit den beiden Zahnrädern 30 und 32 sind in einem Getriebegehäuse 38 angeordnet, das um die Mittelachse der Vorrichtung drehbar ist. Bei dem gezeigten Ausführungsbeispiel ist dies so realisiert, daß sich das Getriebegehäuse 38 auf ein in einem Gehäuseflansch eingesetztes Kugellager relativ großen Durchmessers abstützt.

Die infolge des übertragenen Drehmoments erfolgende Verdrehung des Getriebegehäuses 38 wird von einer Kraftmeßeinrichtung 40 begrenzt und gemessen. Derartige Kraftmeßeinrichtungen sind bekannt und im Handel erhältlich. Sie bestehen im wesentlichen aus einem festeingespannten Biegearm, dessen Verbiegung unter Wirkung einer am Ende des Arms angreifenden Kraft mittels aufgeklebter Dehnungsmeßstreifen festgestellt wird. Entsprechend geeicht, zeigen derartige Kraftmeßeinrichtungen direkt die auf sie ausgeübte Kraft an.

Wird die Vorrichtung von einem Massestrom bestimmter Größe durchströmt, muß zur Aufrechterhaltung einer bestimmten konstanten Winkelgeschwindigkeit W des Flügelrades 12 ein Drehmoment bestimmter Größe übertragen werden. Das praktisch reibungsfrei gelagerte Getriebegehäuse 38 verdreht sich unter Wirkung des reaktiven Drehmoments um einen bestimmten kleinen Winkelbetrag, der zu einer Verlagerung des Meßfingers der Kraftmeßeinrichtung 40 führt. Je größer die Verlagerung dieses Meßfingers ist, desto größer ist auch die von der Kraftmeßeinrichtung gelieferte und gemessene Gegenkraft, welche ein direktes Maß für den das Flügelrad durchsetzenden Massenstrom darstellt.

Im folgenden ist mit $R_1$ der Radius des Abtriebszahnrads 26 auf der zum Drehelement führenden Welle 22 bezeichnet, mit $R_2$ und $R_3$ die Radien der Zahnräder 30 bzw. 32 auf der Zwischenwelle 28, wobei $R_2$ mit $R_1$ und $R_3$ mit dem Antriebsritzel 34 im Eingriff ist.

Das gemessene Drehmoment $M_S$ vom Getriebegehäuse 38 setzt sich aus zwei entgegengesetzten Anteilen $M_{S1}$ und $M_{S2}$ zusammen. Ersterer rührt von der Abtriebswelle 22 her und hat die Größe

$$M_{S1} = \left( \frac{R_1 + R_2}{R_1} \right) M_A$$

$M_A$ ist das Lastelement an der Antriebswelle.
Der zweite Teil stammt vom Antriebsritzel 34 und hat die Größe

$$M_{S2} = -\frac{R_2}{R_3} \cdot \frac{(R_1 + R_2)}{R_1} \cdot M_A$$

Daraus ergibt sich für

$$M_S = M_{S1} + M_{S2}$$

$$M_S = \left( \frac{R_3 - R_2}{R_3} \right) \cdot \left( \frac{R_1 + R_2}{R_1} \right) \cdot M_A \qquad (I)$$

Das gemessene Drehmoment und damit die Empfindlichkeit der Meßanordnung wird also umso größer, je größer $R_3$ gegen $R_2$ und je kleiner $R_1$ gegen $R_2$ gewählt wird.

Wenn sich die zum Drehelement führende Abtriebswelle ohne Belastung leer dreht, bleibt von $M_A$ d. h. dem Ausgangs-Drehmoment nur das Leerlaufmoment $RM_A$ übrig, das auf die Reibung zurückzuführen ist. Diese Reibung führt nach Gleichung (I) zu einem Reaktionsmoment $RM'_S$ am Getriebegehäuse 38 :

$$RM'_S = \frac{R_3 - R_2}{R_3} \cdot \frac{R_1 + R_2}{R_1} \cdot RM_A$$

Ein zweiter, entgegengesetzt gerichteter Anteil $RM''_S$ stammt aus dem Reibmoment $RM_Z$ der Zwischenwelle 28. Hierfür gilt nach ähnlicher Überlegung :

$$RM''_S = - \left( \frac{R_1 + R_2}{R_3} \right) RM_Z$$

Die Summe beider Anteile $RM_S = RM'_S + RM''_S$ ist durch Reibungsverluste verursachte Störgröße. Sie kann zu Null werden, wenn gilt :

$$\left( \frac{R_3 - R_2}{R_3} \right) \cdot \left( \frac{R_1 + R_2}{R_1} \right) RM_A = \left( \frac{R_1 + R_2}{R_3} \right) RM_Z$$

oder

$$\left( \frac{R_3 - R_2}{R_1} \right) = \frac{RM_Z}{RM_A} \qquad (II)$$

Ist Gleichung (II) erfüllt, ist der Reibungseinfluß erfindungsgemäß exakt kompensiert und eine Messung unabhängig von sich mit ändernder Temperatur ändernder innerer Reibung im Getriebe möglich.

Für $R_3 < R_2$ hat das Meßsignal $M_S$ negative Werte (siehe Formel I), d. h. es ist dem Lastmoment $M_A$ entgegengesetzt. Da das Reibmoment der Zwischenwelle ebenfalls dem Lastmoment $M_A$ entgegengerichtet ist, wird eine Kompensation des Reibmoments unmöglich. Erfindungsgemäß muß daher $R_3$ immer größer als $R_2$ sein.

Im folgenden werden der Einfachheit halber die Fälle behandelt, in denen $R_3 = R_1 = 2 R_2$ ist.

Damit wird der erste Klammerausdruck in Formel (II) gleich 0,5. Ein einfaches Meßgerät, das beide Bedingungen erfüllt und für die Messung des Drehmomentbereichs bis herab zu 0-20 Nm geeignet ist, zeigt Fig. 1.

Für diesen Fall verlangt Formel (II), daß

4

0 196 440

$$\frac{R_3 - R_2}{R_1} = \frac{2 - 1}{2} = 0,5 = \frac{RM_Z}{RM_A}$$

ist, d. h. das Reibmoment der Zwischenwelle 28 muß halb so groß sein wie das der Ausgangswelle 22.

Diese Forderung kann durch eine zweckentsprechende Wahl der Zahnradbreite erfüllt werden. Durch Versuche wurde festgestellt, daß der Einfluß der Reibung auf das Meßsignal in einem Temperaturbereich von — 20 °C bis + 50 °C < 0,5 % ist.

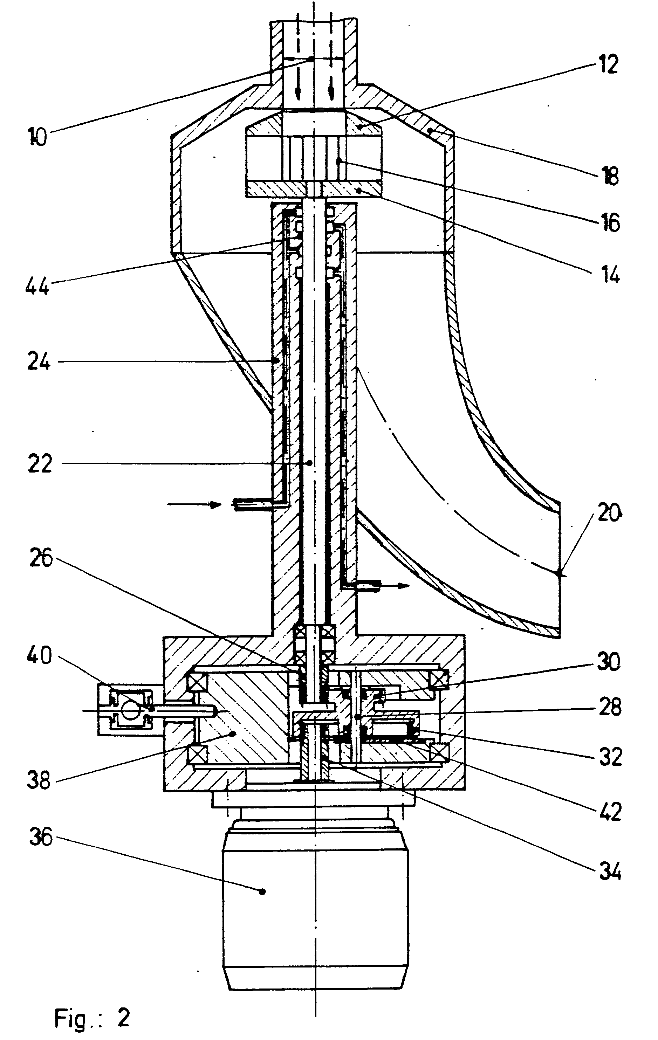

Die Empfindlichkeit der Meßeinrichtung kann noch wesentlich gesteigert werden, wenn das Getriebe so ausgelegt wird, wie es in der Ausführungsform nach Figur 2 dargestellt ist.

Der Durchmesser $R_1$ des Zahnrads 26 auf der zum Drehelement führenden Abtriebswelle wird so klein wie möglich gewählt, um damit, bei vorgegebener Abtriebsdrehzahl, die Umfangsgeschwindigkeit der Zahnräder und damit die Reibung insgesamt zu minimieren. Weiterhin wurde das Problem gelöst, neben der Forderung $R_3 > R_2$ auch die Bedingung $R_2 > R_1$ zu erfüllen, um nach Formel (I) eine hohe Empfindlichkeit zu erreichen.

Um die genannten Bedingungen zu erfüllen, mußte Zahnrad 32 mit einer Innenverzahnung versehen werden. Nach einem Ausführungsbeispiel betrug $R_2 = 2 R_1$ und $R_3 — 2 R_2 = 4 R_1$.

Damit ergab sich gemäß Gleichung (II)

$$\frac{R_3 - R_2}{R_1} = \frac{4 - 2}{1} = 2 = \frac{RM_Z}{RM_A}$$

Das Reibmoment der Zwischenwelle 28 muß somit die doppelte Größe des Reibmoments der Ausgangswelle 22 haben. Dies kann beispielsweise an dem in Figur 2 gezeigten Ausführungsbeispiel mit einer Platte 42 erreicht werden, die parallel zur Ebene des Zahnrads 32 in geringem Abstand von diesem verschiebbar angeordnet ist und so als Flüssigkeitsbremse wirkt.

Mit der gezeigten Vorrichtung wurde die Emfindlichkeit um Faktor 10 gesteigert, so daß der meßbare Drehmomentbereich 0-2 Nm beträgt, die Genauigkeit blieb dabei die gleiche wie im in Figur 1 gezeigten Ausführungsbeispiel. Ein solches Ergebnis läßt sich natürlich nur erzielen, wenn alle Lagerstellen innerhalb des Getriebegehäuses 38 angeordnet sind und sich die temperaturbedingte Viskosität des Getriebeöls auf alle diese Lagerstellen in gleicher Weise auswirkt. Bei dem in Figur 2 gezeigten Ausführungsbeispiel mußte die Abtriebswelle 22 sehr lang ausgeführt werden, so daß eine zweite Lagerung 44 außerhalb des Getriebegehäuses 38 erforderlich war. Da diese Lagerstelle im Betrieb unvermeidlich eine andere Temperatur annimmt als das Getriebegehäuse, wird auch die Temperaturabhängigkeit des Reibungseinflusses und die dadurch bedingte Nullpunktsschwankung wesentlich größer. Dem Problem konnte dadurch beigekommen werden, daß die äußere Lagerstelle 44 als Gaslager ausgeführt wurde, bei dem in bekannter Weise komprimiertes Gas die Welle praktisch reibungsfrei trägt. Diese Ausführung kann ohne größeren Aufwand realisiert werden, da ohnehin für die Anwendung der Vorrichtung in einer staubführenden und unter Überdruck stehenden Leitung die Spaltabdichtungen zur Welle mit komprimiertem Reingas gespült werden müssen.

Die Nullpunktjustierung der Vorrichtung wird folgendermaßen durchgeführt : Man füllt die Vorrichtung mit einem sehr zähen Öl, dessen Viskosität der Viskosität eines Normalöls bei — 20 °C entspricht. Mit diesem Öl wird durch Verstellen der Flüssigkeitsbremse bzw. der Platte 42 der Nullpunkt exakt eingestellt, der dann nach dem Wechseln auf Normalöl bei jeder üblicherweise vorkommenden Temperatur erhalten bleibt.


**Patentansprüche**

1. Vorrichtung zur Messung eines vorzugsweise heterogenen Massestroms mit einem von einer Welle (22) getragenen Drehelement (12), das mit konstanter Drehzahl angetrieben wird und das den axial das Drehelement beaufschlagenden Massestrom radial umlenkt und ihm dabei eine tangentiale Geschwindigkeitskomponente erteilt, wobei an der Welle (22) das vom Massestrom abhängige Drehmoment gemessen wird, und mit einem zweistufigen, in einem Trägerelement (38) angeordneten Stirnradgetriebe mit vier Stirnrädern (26, 30, 32, 34), die Teilkreisradien $R_1$, $R_2$, $R_3$ bzw. $R_4$ aufweisen, von denen das erste Stirnrad (26), das auf der Welle (22) angeordnet ist, mit dem zweiten, auf einer Zwischenwelle (28) angeordneten Stirnrad (30) in Eingriff steht, und das dritte, ebenfalls auf der Zwischenwelle angeordnete Stirnrad (32) mit dem auf einer Antriebswelle angeordneten Stirnrad (34) in Eingriff steht, dadurch gekennzeichnet, daß die in dem Trägerelement (38) beweglich gelagerte Zwischenwelle (28), deren Bewegungsrichtung mit der Richtung der an der Zwischenwelle (28) angreifenden Reaktionskraft übereinstimmt, von einer Kraftmeßeinrichtung (40) in ihrer Lage festgehalten wird und daß das Leerlaufreibmoment $RM_A$ der Welle (22) und das Leerlaufreibmoment $RM_Z$ der Zwischenwelle (28) mit ihren absoluten Werten und der vorgegebenen Voraussetzung $R_3$ größer $R_2$ die Bedingung erfüllen :

5

$$\frac{R_3 - R_2}{R_1} = \frac{RM_Z}{RM_A}$$

2. Vorrichtung nach Anspruch 1, dadurch gekennzeichnet, daß das den Radius $R_3$ aufweisende Stirnrad (32) eine Innenverzahnung aufweist und neben $R_3 > R_2$ auch $R_2 > R_1$ ist.

3. Vorrichtung nach Anspruch 1 oder 2, dadurch gekennzeichnet daß die Reibmomente durch Verwendung von Stirnrädern unterschiedlicher Zahnradbreite variierbar sind.

4. Vorrichtung nach Anspruch 1 oder 2, dadurch gekennzeichnet, daß die Reibmomente durch eine auf die Stirnräder (30, 32) wirkende Flüssigkeitsbremse einstellbar sind.

5. Vorrichtung nach Anspruch 4, dadurch gekennzeichnet, daß die Flüssigkeitsbremse eine der Stirnfläche des Stirnrads (32) mit bestimmtem Abstand gegenüberliegende Platte (42) aufweist, deren Abstand zum Stirnrad (32) einstellbar ist.

## Claims

1. An apparatus for measuring a preferably heterogeneous bulk stream having a rotating element (12) borne by a shaft (22), said element being driven at a constant speed and radially deflecting the bulk stream acting axially upon said rotating element, thereby impressing on it a tangential velocity component, the torque dependent on the bulk stream being measured at the shaft (22), and having a two-step spur gear disposed in a carrier element (38) and having four spur wheels (26, 30, 32, 34) having geometrical radii $R_1$, $R_2$, $R_3$ and $R_4$, respectively, the first spur wheel (26), which is disposed on the shaft (22), meshing with the second spur wheel (30), which is disposed on an intermediate shaft (28), and the third spur wheel (32), which is also disposed on the intermediate shaft, meshing with the spur wheel (34) disposed on a driving shaft, characterized in that the intermediate shaft (28) movably mounted in the carrier element (38), the direction of movement of said intermediate shaft corresponding to the direction of the reaction force acting on the intermediate shaft (28), is fixed in its position by a force measuring means (40), and in that the idling friction torque $RM_A$ of the shaft (22) and the idling friction torque $RM_Z$ of the intermediate shaft (28) satisfy, with their absolute values and the predetermined condition $R_3$ is greater than $R_2$, the following condition :

$$\frac{R_3 - R_2}{R_1} = \frac{RM_Z}{RM_A}$$

2. The apparatus according to claim 1, characterized in that the spur wheel (32) having the radius $R_3$ has internal toothing and not only $R_3 > R_2$ but also $R_2 > R_1$.

3. The apparatus according to claim 1 or 2, characterized in that the friction torques may be varied by using spur wheels of different gearwheel widths.

4. The apparatus according to claim 1 or 2, characterized in that the friction torques may be adjusted by a hydraulic brake acting on the spur wheels (30, 32).

5. The apparatus according to claim 4, characterized in that the hydraulic brake comprises a plate (42) spaced a certain distance opposite the front surface of the spur wheel (32), the distance between said plate and said spur wheel (32) being adjustable.

## Revendications

1. Dispositif de mesure d'un débit massique de préférence hétérogène comportant un élément rotatif (12) qui est porté par un arbre (22), est entraîné à une vitesse constante et dévie radialement le débit massique qu'il reçoit axialement en lui communiquant une composante tangentielle de vitesse, le moment de rotation dépendant du débit massique étant mesuré sur l'arbre (22), et un engrenage droit biétagé disposé dans un élément de support (38) et comportant quatre roues droites (26, 30, 32, 34) qui présentent des rayons primitifs de référence $R_1$, $R_2$, $R_3$ et $R_4$, la première roue droite (26) disposée sur l'arbre (22) s'engrenant dans la deuxième roue droite (30) disposée sur un arbre intermédiaire (28) et la troisième roue droite (32) également disposée sur l'arbre intermédiaire s'engrenant dans la roue droite (34) disposée sur un arbre d'entraînement, caractérisé en ce que l'arbre intermédiaire (28) qui est monté mobile dans l'élément de support (38) et dont la direction de déplacement coïncide avec la direction de la force de réaction agissant sur l'arbre intermédiaire (28), est maintenu dans sa position par un dispositif de mesure d'effort (40) et en ce que le moment de frottement à vide $RM_A$ de l'arbre (22) et le moment de frottement à vide $RM_Z$ de l'arbre intermédiaire (28) remplissent, avec leurs valeurs absolues et l'hypothèse préalablement déterminée $R_3$ plus grand que $R_2$, la condition :

$$\frac{R_3 - R_2}{R_1} = \frac{RM_Z}{RM_A}$$

2. Dispositif selon la revendication 1, caractérisé en ce que la roue droite (32) présentant le rayon $R_3$ comporte une denture intérieure et en ce que, outre $R_3 > R_2$, on a également $R_2 > R_1$.

3. Dispositif selon la revendication 1 ou 2, caractérisé en ce qu'il est possible de faire varier les moments de frottement en utilisant des roues droites de différentes largeurs.

4. Dispositif selon la revendication 1 ou 2, caractérisé en ce que les moments de frottement peuvent être réglés par un frein du liquide agissant sur les roues droites (30, 32).

5. Dispositif selon la revendication 4, caractérisé en ce que le frein du liquide présente une plaque (42) qui, à une certaine distance, fait face à la surface frontale de la roue droite (32) et dont la distance par rapport à la roue droite (32) peut être réglée.

Fig.: 1

Fig.: 2